# EUROPÄISCHE PATENTSCHRIFT

(11) **EP 3 159 856 B1**
(45) Veröffentlichungstag und Bekanntmachung des Hinweises auf die Patenterteilung: **26.01.2022**
(21) Anmeldenummer: 15190839.9
(22) Anmeldetag: 21.10.2015
(51) Int. Cl.: G07F 7/06, B65G 21/06

(54) **EINGABEEINHEIT FÜR EINEN LEERGUTRÜCKNAHMEAUTOMATEN UND LEERGUTRÜCKNAHMEAUTOMAT**
INPUT UNIT FOR AN EMPTIES RETURN MACHINES AND EMPTIES RETURN MACHINE
UNITÉ D'INTRODUCTION POUR UN AUTOMATE DE REPRISE POUR BOUTEILLES CONSIGNÉES ET AUTOMATE DE REPRISE POUR BOUTEILLES CONSIGNÉES

(43) Veröffentlichungstag der Anmeldung: 26.04.2017
(73) Patentinhaber: Wincor Nixdorf International GmbH, 33106 Paderborn (DE)
(72) Erfinder: HARTUNG, Domenic, 99192 Molsdorf (DE); FISCHER, Axel, 98693 Ilmenau (DE); RHEIN, Patrick, 98693 Ilmenau (DE)

(56) Entgegenhaltungen:
- EP-A1- 2 727 860
- DE-U1-202009 002 937

## Beschreibung

Die Erfindung betrifft eine Eingabeeinheit für einen Leergutrücknahmeautomaten und einen Leergutrücknahmeautomaten.

Leergut, welches z.B. in Form von Gebinden vorliegt, wie z.B. Mehrwegflaschen, beispielsweise Kunststoff- und Glasflaschen, wird von Verbrauchern mittels Leergutrücknahmeautomaten, welche z.B. in Supermärkten aufgestellt sind, zurückgegeben. Hierzu wird das Leergut von den Verbrauchern in der Regel einzeln in den Leergutrücknahmeautomaten eingegeben und darin der Leerguttyp von einer Erfassungseinheit erfasst. Anschließend wird das Leergut von einer Eingabeeinheit (anschaulich auch als Transporteinheit bezeichnet) des Leergutrücknahmeautomaten abtransportiert und zur Weiterverwertung ausgegeben, z.B. an einen Sammelbehälter. Jedoch enthält das in den Leergutrücknahmeautomaten eingegebene Leergut häufig Restflüssigkeit, z.B. Getränkereste von Limonade oder Bier, welche bei der Leerguthandhabung im Leergutrücknahmeautomaten austreten kann. Hierbei ist unter anderem die Transporteinheit des Leergutrücknahmeautomaten anfällig für anhaftende Restflüssigkeit, d.h. die Transporteinheit verklebt, und zudem werden unangenehme Gerüche durch die anhaftende Restflüssigkeit erzeugt. Folglich ist eine (regelmäßige) Reinigung des Leergutrücknahmeautomaten, vor allem der Eingabeeinheit, erforderlich, wobei die Reinigung zeitaufwendig ist, aufgrund der beengten Platzverhältnisse im Leergutrücknahmeautomaten beschwerlich ist sowie die Verfügbarkeit des Leergutrücknahmeautomaten herabsetzt.

Aus der EP 2 727 860 A1 ist z.B. ein Förderbandmodul für einen Rücknahmeautomaten bekannt, welches lösbar mit einer Basiseinheit kuppelbar ist und aus dem Rücknahmeautomaten entnehmbar ist. Die DE 20 2009 002937 U1 A1 beschreibt eine Annahmeeinrichtung für Rücknahmeautomaten, die Bandförderer, ein Rotationselement, eine Erkennungseinrichtung, ein Waage und eine übergeordnete Steuerung aufweist, wobei das Rotationselement im Rotationsbereich zwischen den Bandförderern gelagert sowie relativ zu ihnen höhenverstellbar ausgebildet ist.

Aus der DE 10 2004 054 284 B4 ist z.B. eine Fördereinheit für Behälter (Getränkebehälter) bekannt, wobei die Fördereinheit mit einer Wägeeinheit und einer Antriebseinheit lösbar gekuppelt ist.

Es werden eine Eingabeeinheit für einen Leergutrücknahmeautomaten und ein Leergutrücknahmeautomat geschaffen, welche zur Reinigung/Wartung leicht zugänglich sind.

Es werden eine Eingabeeinheit für einen Leergutrücknahmeautomaten gemäß Anspruch 1 und ein Leergutrücknahmeautomat gemäß Anspruch 13 bereitgestellt.

Weitere Ausführungsformen der Eingabeeinheit und des Leergutrücknahmeautomaten sind in den jeweiligen abhängigen Ansprüchen beschrieben.

Hier bezeichnet die Angabe "vorne" einen Bereich / eine Richtung, welcher/welche zu einer Vorderseite des Leergutrücknahmeautomaten korrespondiert, und bezeichnet die Angabe "hinten" oder "Rückseite" einen Bereich / eine Richtung, welcher/welche zu einer Hinter-/Rückseite des Leergutrücknahmeautomaten korrespondiert. Weiter erstreckt sich eine hierin definierte Transportrichtung von Leergut z.B. zumindest im Wesentlichen entlang einer Vorne-Hinten-Richtung des Leergutrücknahmeautomaten, d.h. die Transportrichtung liegt zumindest im Wesentlichen in einer Horizontalebene. Eine Vertikalrichtung/Oben-Unten-Richtung (Schwerkraftrichtung) des Leergutrücknahmeautomaten ist zumindest im Wesentlichen senkrecht zur Horizontalebene.

Im Weiteren bezeichnet der Begriff "Leergut" einen einzelnen (zumindest im Wesentlichen) leeren Getränkebehälter, z.B. eine Mehrwegflasche, beispielsweise eine Kunststoff- oder Glasflasche, eine Einwegflasche, beispielsweise eine PET-Flasche (PET: Polyethylenterephthalat), oder eine Getränkedose, beispielsweise eine Aluminiumdose.

Eine Eingabeeinheit für einen Leergutrücknahmeautomaten gemäß einer beispielhaften Ausführungsform weist eine Fördereinheit mit z.B. mindestens einem Förderband (z.B. auch mit einer Reihe von Förderrollen, welche eine Transportvorrichtung bilden) zum Aufnehmen und Transportieren des Leergutes auf. Weiter kann die Eingabeeinheit eine Führungsstruktur (z.B. eine Führungsschiene / ein Führungsschienenpaar) zum Tragen und Führen der Fördereinheit relativ zu einem Gehäuse des Leergutrücknahmeautomaten aufweisen.

Außerdem kann die Fördereinheit einen Flüssigkeitsablauf aufweisen (welcher z.B. an einem vorderen Ende davon endet, z.B. in Form einer nach vorne geneigten Rinne oder Rampe), sodass etwaige aus dem Leergut austretende Restflüssigkeit ableitbar ist (welche dann z.B. separat von der Fördereinheit im Leergutrücknahmeautomaten gesammelt wird).

Die Fördereinheit ist eingerichtet, das auf das mindestens eine Förderband gelegte Leergut entlang der Transportrichtung zu transportieren, beispielsweise liegend und mit dem Boden des Leergutes voran. Die Führungsstruktur ist zum Tragen und Führen der Fördereinheit entlang der Transportrichtung angeordnet, d.h., die Fördereinheit ist z.B. selektiv entlang der Transportrichtung bewegbar. Darüber hinaus kann die Fördereinheit beispielsweise eingerichtet sein, zusätzlich zum Transport des Leergutes dieses selektiv, z.B. um eine Achse parallel zur Transportrichtung, zu drehen. Diese Drehung des Leergutes kann dazu dienen, es einer Leergut-Erfassungsvorrichtung (z.B. einem Scanner, beispielsweise einem Barcodescanner) des Leergutrücknahmeautomaten zu ermöglichen, im Wesentlichen alle Seiten des Leergutes auf der Fördereinheit zu erfassen. Auf diese Art kann der Leerguttyp durch die Leergut-Erfassungsvorrichtung ermittelt werden. Solche Leergut-Erfassungsvorrichtungen bzw. Leergut-Drehvorrichtungen sind hinreichend bekannt.

Die Fördereinheit kann z.B. mehrere in einem Winkel zueinander angeordnete Förderbänder aufweisen, beispielsweise zwei, drei, vier oder mehr Förderbänder, welche mittels zugehörigen Förderband-Transportflächen eine Wannenform (z.B. V oder U-förmig) bilden, um darin das zu transportierende Leergut aufzunehmen und abzustützen. Andererseits kann z.B. das mindestens eine Förderband selbst U oder V-förmig gestaltet sein, um das Leergut aufzunehmen und abzustützen.

Das zumindest eine Förderband lauft auf einem Förderband-Tragarm um, welcher an einem (z.B. hinteren) Ende davon mit der Fördereinheit an einer Oberseite davon durch eine Verschiebekupplungsvorrichtung und eine (z.B. zwei) Schwenkkupplungsvorrichtung(en) lösbar gekuppelt ist. Die Verschiebekupplungsvorrichtung kann z.B. ein an der unteren Seite des Förderband-Tragarms vorstehendes Kupplungspaneel (z.B. eine Kupplungsplatte) sein, dessen Paneelflächen z.B. zumindest im Wesentlichen parallel zur Transportrichtung und z.B. zumindest im Wesentlichen senkrecht zur Förderband-Transportfläche sind. Weiter kann das Kupplungspaneel an einem hinteren Rand davon einen Schlitz aufweisen, welcher mit einem korrespondierenden Steg der Fördereinheit selektiv in Eingriff gehen kann. Das heißt, wenn die Verschiebekupplungsvorrichtung gekuppelt ist, ist der Steg im Schlitz aufgenommen und ist eine Bewegung des Förderband-Tragarms entlang der Transportrichtung gestattet (z.B. zum Entnehmen des Förderband-Tragarms samt Förderband), wohingegen eine Bewegung quer zur Transportrichtung verhindert ist. Ferner kann die Schwenkkupplungsvorrichtung einen Zapfen, welcher am Förderband-Tragarm seitlich vorsteht (z.B. an einem hinteren Ende davon), und eine dazu korrespondierende Nut aufweisen, welche an der Fördereinheit ausgebildet ist. Zum Kuppeln/Entkuppeln des Förderband-Tragarms ist der Zapfen in die zugehörige Nut einsetzbar, sodass eine Schwenk- und Verschiebebewegung des Förderband-Tragarms mittels der Schwenkkupplungsvorrichtung möglich ist. Weiter ist durch die Schwenkkupplungsvorrichtung der Förderband-Tragarm an der Fördereinheit verrastbar (z.B. mechanisch oder magnetisch verriegelbar), sodass der Förderband-Tragarm an der Fördereinheit fixiert ist. Folglich kann der Förderband-Tragarm zur Reinigung und/oder Wartung von der Fördereinheit gelöst werden und z.B. durch einen anderen (sauberen) Förderband-Tragarm ersetzt werden, sodass die Fördereinheit schnell wieder einsatzbereit ist. Zudem ermöglicht der Austausch der Förderband-Tragarme eine Anpassung der Fördereinheit auf verschiedene Leerguttypen.

Die Führungsstruktur der Eingabeeinheit kann mindestens eine Schiene aufweisen (z.B. auch ein Schienenpaar), auf welcher die Fördereinheit verschiebbar getragen und geführt ist.

Die mindestens eine Schiene kann z.B. als eine Teleskopschiene ausgebildet sein, z.B. als ein Teleskopschienenauszug, von welcher z.B. ein Schienenelement fest mit dem Gehäuse des Leergutrücknahmeautomaten verbunden ist und von welcher z.B. ein (das) andere Schienenelement fest mit der Fördereinheit verbunden ist. Dementsprechend ist die Fördereinheit z.B. entlang der Transportrichtung bewegbar, z.B. selektiv aus dem Leergutrücknahmeautomaten herausbewegbar. Dies kann dazu dienen, um einen leichten Zugang zur Fördereinheit für Wartungs- und/oder Reinigungstätigkeiten zu haben.

Die Fördereinheit kann z.B. schubladenförmig ausgebildet sein, z.B. als ein Schubladenauszug. Beispielsweise kann die Fördereinheit in Art einer Schublade aus dem Leergutrücknahmeautomaten herausbewegbar (z.B. manuell herausziehbar) gestaltet sein.

Die Eingabeeinheit kann ferner mindestens einen Antrieb zum Antreiben des mindestens einen Förderbands aufweisen.

Der Antrieb kann einen Motor aufweisen, z.B. einen Elektromotor. Der Motor kann innerhalb der Fördereinheit angeordnet sein, sodass er vor austretender Restflüssigkeit geschützt ist.

Die Eingabeeinheit kann ferner mehrere Antriebe zum Antreiben der mehreren Förderbänder aufweisen, wobei jeweils ein Antrieb zum Antreiben eines jeweils zugeordneten Förderbandes mit dem jeweiligen Förderband gekuppelt ist (z.B. direkt gekuppelt oder mittels eines Getriebes, z.B. eines Zahnradgetriebes).

Die Fördereinheit kann lösbar mit der Führungsstruktur gekuppelt sein, z.B. mittels Schnellverschlüssen und/oder Schraubverbindungen.

Die Fördereinheit kann ferner eine Trägerplatte und eine oder mehrere auf der Trägerplatte montierte Steuerungsplatinen mit mindestens einem Antriebs-Steuerungsschaltkreis aufweisen. Die Trägerplatte kann z.B. mit der Fördereinheit einstückig ausgeführt sein oder kann als von dieser separates Teil ausgeführt sein. Die Trägerplatte kann z.B. derart innerhalb der Fördereinheit angeordnet sein, sodass sie vor austretender Restflüssigkeit geschützt ist.

Die Fördereinheit kann ferner eine Waage (z.B. eine Leergutwaage) mit einer oder mehreren Wägezellen aufweisen, wobei das mindestens eine Förderband auf der Waage angeordnet ist. Die Waage kann z.B. dazu dienen, ein Gewicht eines gegenwärtig auf der Fördereinheit transportierten Leergutes zu erfassen. Auf Basis des erfassten Gewichts, z.B. im Zusammenspiel mit der Leergut-Erfassungsvorrichtung, der kann Leerguttyp ermittelt werden. Die Waage kann z.B. zwischen der Fördereinheit und dem Förderband angeordnet sein, um das Förderband zu tragen (z.B. mittels des zugehörigen Förderband-Tragarms).

Die Trägerplatte kann von der Waage kraftentkoppelt sein, sodass Vibrationen/Erschütterungen aufgrund des Leerguttransports von der Trägerplatte ferngehalten werden.

Ein Leergutrücknahmeautomat gemäß einer beispielhaften Ausführungsform kann ein Gehäuse, eine Tür und die vorher beschriebene Eingabeeinheit aufweisen. Das Gehäuse umgibt den Leergutrücknahmeautomaten und ist an der Vorderseite des Leergutrücknahmeautomaten durch die Tür öffen- und schließbar, welche z.B. schwenkbar am Gehäuse befestigt ist. In einem geschlossenen Zustand der Tür ist der Leergutrücknahmeautomat nicht zugänglich, wohingegen in einem geöffneten Zustand der Tür der Leergutrücknahmeautomat an seiner Vorderseite zugänglich ist (z.B. ist die herausziehbare/herausgezogene Fördereinheit leicht erreichbar). Die Tür weist weiter eine Öffnung auf, durch welche hindurch das Leergut in den Leergutrücknahmeautomaten hinein eingebbar ist. Die Eingabeeinheit mit der Fördereinheit kann in dem Gehäuse relativ zu der Öffnung derart angeordnet sein, dass ein durch die Öffnung geführtes Leergut auf das mindestens eine Förderband gelegt werden kann. Wenn der Leergutrücknahmeautomat nicht zugänglich ist, ist ein Zugriff auf die Führungsstruktur der Eingabeeinheit verhindert.

Weiter kann im geöffneten Zustand des Leergutrücknahmeautomaten ein Zugriff auf die Führungsstruktur erlaubt sein und kann die Fördereinheit entgegen der Transportrichtung bewegt werden kann, z.B. aus dem Leergutrücknahmeautomaten herausgezogen/gefahren werden (z.B. zur Reinigung und/oder Wartung).

Ausführungsbeispiele der Erfindung sind in den Figuren dargestellt und werden im Folgenden näher erläutert.

Es zeigen:
- Figur 1A: eine perspektivische Ansicht einer Eingabeeinheit gemäß einer beispielhaften Ausführungsform;
- Figur 1B: eine Detailansicht der Eingabeeinheit, welche in der Figur 1A gezeigt ist;
- Figur 2A: eine Schnittansicht durch die in der Figur 1A gezeigte Eingabeeinheit entlang der Linie A-A;
- Figur 2B: eine Detailansicht der Eingabeeinheit, welche in der Figur 2A gezeigt ist;
- Figur 3A: eine schematische, seitliche Schnittansicht eines Leergutrücknahmeautomaten mit einer Eingabeeinheit gemäß einer beispielhaften Ausführungsform, wobei eine Tür des Leergutrücknahmeautomaten geschlossenen ist und eine Fördereinheit eingefahren ist;
- Figur 3B: eine weitere schematische, seitliche Schnittansicht des Leergutrücknahmeautomaten aus der Figur 3A, wobei die Tür offen ist und die Fördereinheit ausgefahren ist; und
- Figur 4: eine schematische Vorderansicht des Leergutrücknahmeautomaten aus der Figur 3A mit geschlossener Tür.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekuppelt" verwendet zum Beschreiben sowohl einer direkten als auch einer indirekten Verbindung, eines direkten oder indirekten Anschlusses sowie einer direkten oder indirekten Kupplung. In den Figuren werden identische oder ähnliche Elemente mit identischen Bezugszeichen versehen, soweit dies zweckmäßig ist.

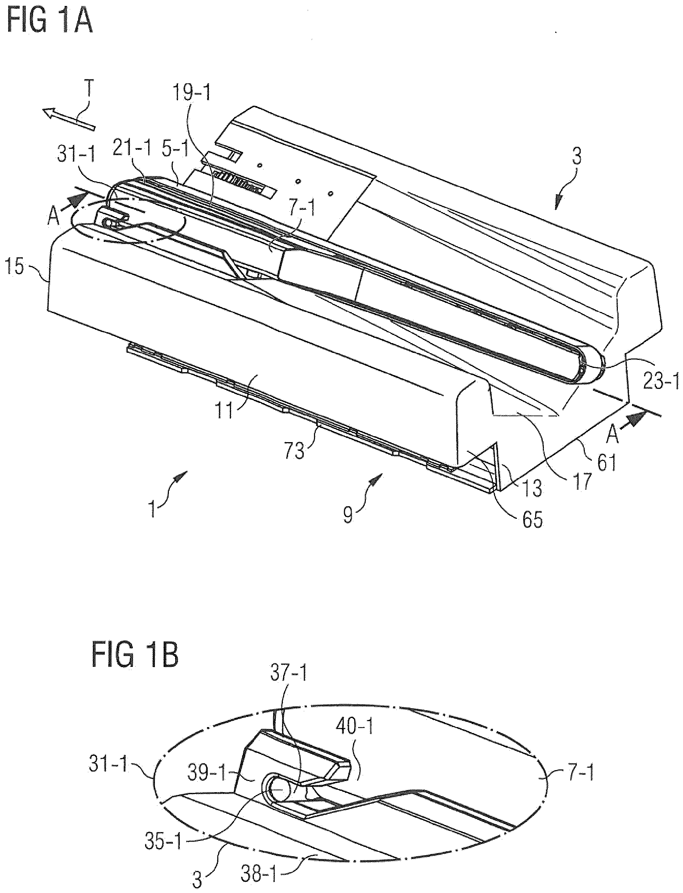

**Fig.1A** zeigt eine perspektivische Ansicht einer Eingabeeinheit 1 für einen Leergutrücknahmeautomaten (nicht gezeigt) gemäß einer beispielhaften Ausführungsform.

Die Eingabeeinheit 1 weist auf: eine Fördereinheit 3 mit einem ersten und einem zweiten Förderband 5-1, 5-2, welches um einen zugehörigen ersten bzw. zweiten Förderband-Tragarm 7-1, 7-2 umläuft, und eine Führungsstruktur 9. Die Fördereinheit 3 weist ein z.B. zumindest im Wesentlichen langgestrecktes Gehäuse 11 auf, welches ein vorderes Ende 13 hat, das der Vorderseite des Leergutrücknahmeautomaten zugewandt ist, und welches ein hinteres Ende 15 hat, das der Rückseite des Leergutrücknahmeautomaten zugewandt ist. Die Fördereinheit 3 ist z.B. an ihrer Ober-, Vorder- Rückseite sowie an den Seiten vom Gehäuse 11 umgeben, d.h., das Innere der Fördereinheit 3 ist durch das Gehäuse 11 vor Restflüssigkeit geschützt. Das Gehäuse 11 hat an seiner Oberseite eine z.B. V-förmige Rinne 17 geformt, die sich z.B. vom hinteren Ende 15 zum vorderen Ende 13 erstreckt. Die Rinne 17 hat ein Gefälle in Richtung zum vorderen Ende 13 ausgebildet, welches hier beispielhaft in einem Bereich zwischen dem vorderen und dem hinteren Ende 13, 15 (z.B. in etwa mittig zwischen dem vorderen und dem hinteren Ende 13, 15 oder z.B. in etwa bei einem Drittel der Distanz zwischen dem hinteren und dem vorderen Ende 13, 15) beginnt. Die Rinne 17 dient dazu, aus dem Leergut (nicht gezeigt) austretende Restflüssigkeit zum vorderen Ende 13 der Fördereinheit 3 abfließen zu lassen (wo es dann z.B. in einen (nicht gezeigten) Sammelbehälter abfließt).

Am hinteren Ende 15 der Fördereinheit 3 sind der erste und der zweite Förderband-Tragarm 7-1, 7-2 beiderseits der Rinne 17 mit der Oberseite der Fördereinheit 3 lösbar gekuppelt. Die Förderband-Tragarme 7-1, 7-2 sind außerhalb des Gehäuse 11 angeordnet. Der erste bzw. der zweite Förderband-Tragarm 7-1, 7-2 weist an seinem hinteren Ende eine jeweilige erste bzw. zweite Antriebsrolle 21-1 bzw. 21-2 sowie an seinem vorderen Ende eine jeweilige erste bzw. zweite Führungsrolle 23-1 bzw. 23-2 auf, um welche herum das erste bzw. das zweite Förderband 5-1 bzw. 5-2 läuft und geführt wird. Die Förderband-Tragarme 7-1, 7-2 erstrecken sich entlang der Oberseite des Gehäuses 11 in Richtung zum vorderen Ende 13 und erstrecken sich nach vorne über dieses hinaus. Die Förderbänder 5-1, 5-2 der Förderband-Tragarme 7-1, 7-2 sind korrespondierend zur Rinne 17 orientiert, d.h., eine zugehörige erste und zweite Förderbandoberfläche 19-1, 19-2 der Förderbänder 5-1, 5-2 bilden eine V-Form, deren Spitze nach unten weist (zum Scheitel der Rinne 17). Durch die Bewegungsrichtung der Förderbänder 5-1, 5-2 ist eine Transportrichtung T für das Leergut definiert. Die Transportrichtung T verläuft z.B. im Wesentlichen vom vorderen Ende 13 zum hinteren Ende 15 der Fördereinheit 3 in z.B. einer Horizontalebene des Leergutrücknahmeautomaten.

Die Fördereinheit 3 dient dazu, in den Leergutrücknahmeautomaten eingegebenes Leergut mittels des ersten und des zweiten Förderbands 5-1, 5-2 abzutransportieren (unter Verwendung eines weiter unten erläuterten Antriebs). Hierzu wird das Leergut, beispielsweise eine Flasche, von einem Nutzer z.B. mit dem Flaschenboden voran in den von den Förderbandoberflächen 19-1, 19-2 definierten V-förmigen Bereich gelegt, sodass eine Flaschenmantelfläche mit der ersten und mit der zweiten Förderbandoberfläche 19-1, 19-2 in Kontakt kommt und im (vom) V-förmigen Bereich zentriert wird. Anschließend erfolgt der Abtransport der Flasche durch die Förderbänder 5-1, 5-2 in der Transportrichtung T zu einer Rückseite des Leergutrücknahmeautomaten, sodass die Fördereinheit 3 zur Aufnahme einer neuen Flasche bereit ist. Beim Auflegen und/oder beim Transport der Flasche kann darin enthaltene Restflüssigkeit austreten, welche dann entweder direkt oder über die Förderbänder 5-1, 5-2 bzw. die Förderband-Tragarme 7-1, 7-2 in die Rinne 17 fließt und zum vorderen Ende 13 der Fördereinheit 3 geleitet wird.

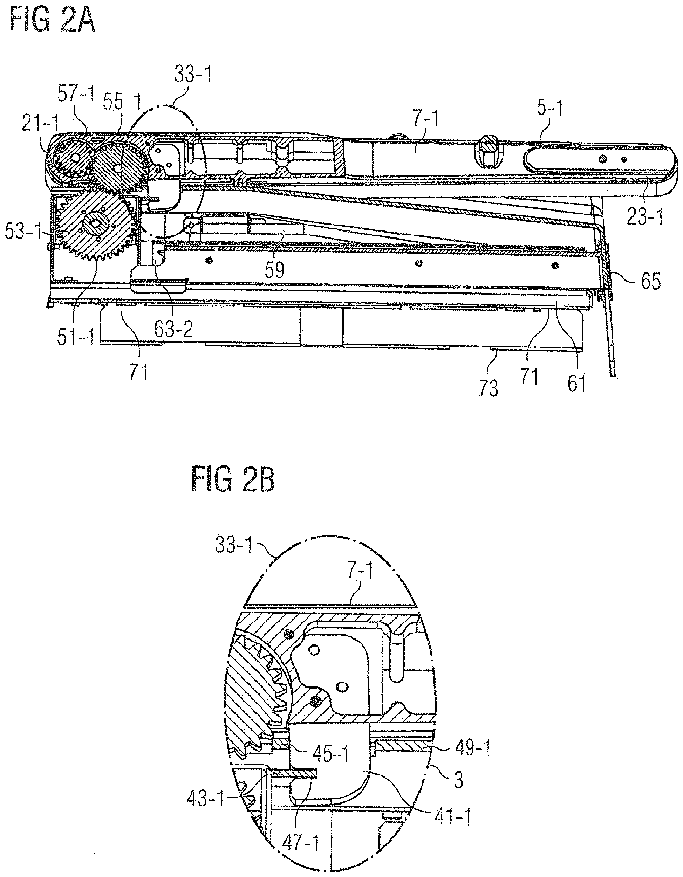

Nachfolgend ist unter Bezugnahme auf die Figuren 1A, 1B, 2A und 2B die Struktur des ersten und des zweiten Förderband-Tragarms 7-1, 7-2 anhand des ersten Förderband-Tragarms 7-1 beschrieben; der zweite Förderband-Tragarm 7-2 hat eine hierzu analoge Struktur und wird nicht separat beschrieben.

Der erste Förderband-Tragarm 7-1 der Fördereinheit 3 ist über eine äußere und eine innere erste Schwenkkupplungsvorrichtung 31-1 und über eine erste Verschiebekupplungsvorrichtung 33-1 mit der Fördereinheit 3 lösbar gekuppelt.

Wie es in der Fig.1A gezeigt ist, ist eine äußere erste Schwenkkupplungsvorrichtung 31-1 seitlich am ersten Förderband-Tragarm 7-1 angeordnet. Eine innere erste Schwenkkupplungsvorrichtung 31-1 ist Zwecks der Anschaulichkeit nicht gezeigt; diese ist auf der anderen Seite (Seite der Rinne 17) des ersten Förderband-Tragarms 7-1 analog zur äußeren ersten Schwenkkupplungsvorrichtung 31-1 angeordnet.

Die **Fig.1B** zeigt eine Detailansicht der äußeren ersten Schwenkkupplungsvorrichtung 31-1, welche am ersten Förderband-Tragarm 7-1 einen ersten Zapfen 35-1 und an der Fördereinheit 3 eine erste Nut 37-1 aufweist. Der erste Zapfen 35-1 ist mit der dazu korrespondierenden ersten Nut 37-1 der Fördereinheit 3 in Eingriff bringbar. Der erste Zapfen 35-1 steht an einem hinteren Ende (z.B. direkt am oder benachbart zum hinteren Ende) des ersten Förderband-Tragarms 7-1 an der Außenseite davon quer zur Transportrichtung T vor (z.B. parallel zur Förderbandoberfläche 19-1). Die dazu korrespondierende erste Nut 37-1 ist in einer am hinteren Ende 15 auf der Oberseite der Fördereinheit 3 ausgebildeten ersten Kupplungsschiene 38-1 geformt, d.h., die Kupplungsschiene 38-1 steht nach oben über das Gehäuse 11 vor. Die erste Kupplungsschiene 38-1 erstreckt sich zumindest im Wesentlichen entlang der Förderrichtung T. In einem hinteren Bereich der ersten Nut 37-1 ist ein erster Verriegelungsabschnitt 39-1 zum Verriegeln des ersten Zapfens 35-1 vorgesehen. In einem vorderen Bereich der ersten Nut 37-1 ist ein erster Einführabschnitt 40-1 vorgesehen, welcher bezogen auf die Transportrichtung T nach oben geneigt ist, sodass eine direkte Bewegung des ersten Zapfens 35-1 in der ersten Nut 37-1 entlang der Transportrichtung T im ersten Einführabschnitt 40-1 nicht möglich ist. Der erste Förderband-Tragarm 7-1 ist zwischen der äußeren und der inneren ersten Kupplungsschiene 38-1 (nur die äußere erste Kupplungsschiene 38-1 ist in den Fig.1A und Fig.1B gezeigt) platzierbar. Im Kupplungszustand des ersten Förderband-Tragarms 7-1 mit der Fördereinheit 3 ist der ersten Zapfen 35-1 im zugehörigen Verriegelungsabschnitt 39-1 der ersten Nut 37-1 verriegelt aufgenommen, z.B. formschlüssig durch eine (nicht dargestellte) Klinke/Raste.

In der **Fig.2A****,** welche eine Schnittansicht der Fördereinheit 3 entlang der Linie A-A der Fig.1A ist, und in der **Fig.2B****,** welche eine Detailansicht der Fig.2A ist, ist die erste Verschiebekupplungsvorrichtung 33-1 dargestellt.

Die erste Verschiebekupplungsvorrichtung 33-1 weist eine am Förderband-Tragarm 7-1 nach unten vorstehende erste Kupplungsplatte 41-1 sowie einen dazu korrespondierenden, im Inneren der Fördereinheit 3 ausgebildeten ersten Steg 43-1 auf. Die erste Kupplungsplatte 41-1 steht zumindest im Wesentlichen senkrecht zur ersten Förderbandoberfläche 19-1 an der Unterseite, z.B. seitlich zum ersten Förderband 5-1 versetzt, am ersten Förderband-Tragarm 7-1 vor. Plattenflächen der ersten Kupplungsplatte 41-1 erstrecken sich zumindest im Wesentlichen entlang der Transportrichtung T und senkrecht zur ersten Förderbandoberfläche 19-1. Ein zum hinteren Ende des ersten Förderband-Tragarms 7-1 orientierter erster Rand 45-1 der ersten Kupplungsplatte 41-1 ist mit einem ersten Schlitz 47-1 versehen, welcher die Plattenflächen der ersten Kupplungsplatte 41-1 miteinander verbindet. An der Oberseite des Gehäuses 11 ist eine erste Aussparung 49-1 ausgebildet, in welche die erste Kupplungsplatte 41-1 hinein einsetzbar ist. Der erste Schlitz 47-1 der ersten Kupplungsplatte 41-1 korrespondiert im eingesetzten Zustand zum ersten Steg 43-1 der Fördereinheit 3, welcher innerhalb der Fördereinheit 3 in einem Bereich zwischen dem Anfang der Rinne 17 und dem hinteren Ende 15 ausgebildet ist. Der erste Steg 43-1 kragt in Richtung zum vorderen Ende 13 hin aus und ist hier einstückig mit der Fördereinheit 3 gebildet. Im Kupplungszustand des ersten Förderband-Tragarms 7-1 mit der Fördereinheit 3 greift der erste Steg 43-1 in den ersten Schlitz 47-1 ein und verhindert eine Bewegung des Förderband-Tragarms 7-1 senkrecht zur Förderbandoberfläche 19-1.

In der Fig.2A ist weiter ein erster Elektromotor 51-1 gezeigt (als doppelpunkt-strichlierter Umriss), welcher als Antrieb des ersten Förderbands 5-1 dient (ein zweiter Elektromotor als Antrieb des zweiten Förderbands 5-2 ist hier nicht dargestellt).

Der erste Elektromotor 51-1 ist innerhalb der Fördereinheit 3, d.h. im Gehäuse 11, angeordnet und ist mit einem ersten Antriebsritzel 53-1 (Motorritzel) gekuppelt, welches teilweise über die Oberfläche des Gehäuses 11 nach oben vorsteht. Das erste Antriebsritzel 53-1 kann mit einem entsprechenden ersten Zwischenzahnrad 55-1 des ersten Förderband-Tragarms 7-1 in Eingriff sein. Das erste Zwischenzahnrad 55-1 ist derart im ersten Förderband-Tragarm 7-1 angeordnet, sodass es im Kuppelzustand mit dem ersten Motorritzel 53-1 im Eingriff ist. Das erste Zwischenzahnrad 55-1 ist weiter mit einem ersten Antriebsrollenzahnrad 57-1 im Eingriff, das mit der ersten Antriebsrolle 21-1 gekuppelt ist. Folglich kann der erste Elektromotor 51-1 im Kupplungszustand des ersten Förderband-Tragarms 7-1 mit der Fördereinheit 3 über das erste Antriebsritzel 53-1, das erste Zwischenzahnrad 55-1, das erste Antriebsrollenzahnrad 57-1 und die erste Antriebsrolle 21-1 das erste Förderband 5-1 antreiben.

Ein Kupplungsvorgang des ersten Förderband-Tragarms 7-1 mit der Fördereinheit 3 ist nachfolgend beispielhaft beschrieben. Der erste Förderband-Tragarm 7-1 wird von oberhalb des Gehäuses 11 mit seinen beiden ersten Zapfen 35-1 in den jeweils zugehörigen ersten Einführabschnitt 40-1 der ersten Nut 37-1 hinein eingesetzt und dann um die ersten Zapfen 35-1 herum in Richtung zur Oberseite der Fördereinheit 3 hin geschwenkt, sodass die erste Kupplungsplatte 41-1 in die erste Aussparung 49-1 der Fördereinheit 3 eingesetzt ist. In diesem Zustand ist nur noch eine Schwenkbewegung des ersten Förderband-Tragarms 7-1 um die ersten Zapfen 35-1 sowie eine Verschiebebewegung entlang der ersten Nuten 37-1 möglich. Anschließend wird der nun im Wesentlichen parallel zur Fördereinheit 3 ausgerichtete erste Förderband-Tragarm 7-1 in der Transportrichtung T bewegt (entlang der ersten Nuten 37-1), sodass seine beiden ersten Zapfen 35-1 in den jeweils zugehörigen ersten Verriegelungsabschnitt 39-1 der ersten Nut 37-1 gelangen und der erste Schlitz 47-1 mit dem ersten Steg 43-1 in Eingriff gelangt. In diesem Zustand befinden sich das erste Antriebsritzel 53-1 und das erste Zwischenzahnrad 55-1 ebenfalls miteinander im Eingriff. Dann werden die beiden ersten Zapfen 35-1 verriegelt, sodass der Kupplungsvorgang abgeschlossen ist. Der erste Förderband-Tragarm 7-1 ist nun fest mit der Fördereinheit 3 gekuppelt, und das erste Förderband 5-1 ist nun durch den ersten Elektromotor 51-1 antreibbar. Der Entkupplungsvorgang des ersten Förderband-Tragarms 7-1 läuft hierzu analog in umgekehrter Reihenfolge ab.

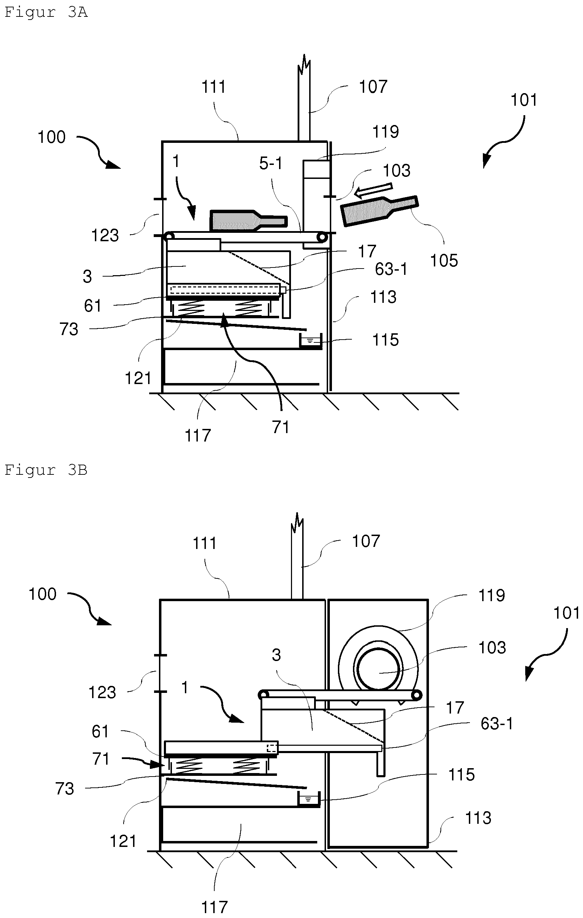

Weiter ist in der Fig.2A eine Steuerungsplatine 59 gezeigt, welche elektrisch mit dem ersten Elektromotor 51-1 (beispielsweise auch mit dem zweiten Elektromotor) zur Energieversorgung und zur Steuerung des ersten Elektromotors 51-1 verbunden ist. Die Steuerungsplatine 59 ist im Gehäuse 11 der Fördereinheit 3 bereitgestellt und wird durch dieses vor Restflüssigkeit geschützt. Beispielsweise kann die Steuerungsplatine 59 direkt mit einer Innenseite des Gehäuses 11 der Fördereinheit verbunden (z.B. verschraubt) sein, oder kann auf einer separaten Trägerplatte der Eingabeeinheit 1 angebracht sein, welche von der Fördereinheit 3 entkoppelt ist (siehe Beschreibung der Waage weiter unten). Bezugnehmend auf die Fig.2A, Fig.3A und Fig.3B ist nachfolgend die Eingabeeinheit 1 mit ihrer Führungsstruktur 9 zum Tragen der Fördereinheit 3 beschrieben.

Die Führungsstruktur 9 weist eine erste und eine zweite Teleskopschiene 63-1, 63-2 auf. Die Fördereinheit 3 ist über die erste und eine zweite Teleskopschiene 63-1, 63-2, welche jeweils an einer rechten bzw. linken unteren Seite der Fördereinheit 3 angeordnet sind und mit dem Gehäuse 11 verbunden sind, mit einer Grundplatte 61 verbunden. Die Grundplatte 61 ist mit Bezug auf das Gehäuse des Leergutrücknahmeautomaten in der Transportrichtung T fixiert. Ein relativ zum Gehäuse des Leergutrücknahmeautomaten fest angebrachter Teil der Teleskopschienen 63-1, 63-2 ist mit der Grundplatte 61 verbunden, und ein bewegbarer Teil der Teleskopschienen 63-1, 63-2 ist mit der Fördereinheit 3 (z.B. dem Gehäuse 11) verbunden. Mittels der zwei Teleskopschienen 63-1, 63-2 ist die Fördereinheit 3 in der Art eines Schubladenauszugs in der Transportrichtung T relativ zur Grundplatte 61 bewegbar, d.h., von einer Betriebsposition (eingefahren) zu einer Reinigungs-/ Wartungsposition (ausgefahren). Hier erfolgt eine Bewegung der Fördereinheit 3 durch Ziehen, z.B. durch das Wartungspersonal. Das Ziehen (oder das Zurückbewegen) ist z.B. durch eine Gasdruckfeder oder einen Federmechanismus (nicht gezeigt) unterstützt. Zumindest in der Betriebsposition ist die Fördereinheit 3 verriegelbar, in diesem Fall durch eine Verriegelungsvorrichtung 65. Die Verriegelungsvorrichtung 65 ist am vorderen Ende 13 des Gehäuses 11 angebracht und dient sowohl zur Verriegelung der Fördereinheit 3 an der Grundplatte 61 wie auch als Handgriff zum Herausziehen der Fördereinheit 3. Weiter kann die Fördereinheit 3 auch in der Reinigungs-/Wartungsposition fixierbar sein, bspw. durch eine Kraft der Gasdruckfeder, welche gegen einen Endanschlag der Führungsstruktur 9 wirkt, um eine ungewünschte Bewegung der Fördereinheit 3 zu verhindern. Zudem ist die Fördereinheit 3 von der Grundplatte 61 lösbar, d.h., es sind Kupplungsvorrichtungen wie z.B. Schnell- oder Schraubverschlüsse zwischen der Fördereinheit 3 und den Teleskopschienen 63-1, 63-2 vorgesehen.

Die Eingabeeinheit 1 ist weiter mit einer Waage 71 bereitgestellt, mittels welcher das auf der Fördereinheit 3 transportierte Leergut gewogen werden kann. Die Waage 71 ist zwischen der Grundplatte 61 und einer Basisplatte 73 des Leergutrücknahmeautomaten angeordnet und ist z.B. aus mehreren Wägezellen gebildet. Die Basisplatte 73 ist im Leergutrücknahmeautomaten fixiert und trägt die Eingabeeinheit 1. Das heißt, die Waage 71 erlaubt es, eine Kraft zu messen, welche zwischen der Basisplatte 73 und der Grundplatte 61 wirkt. Somit ist eine Gewichtskraft des Leerguts, welches auf der Fördereinheit 3 liegt, messbar.

Wie oben bereits erläutert, kann die Steuerungsplatine 59 auf einer Trägerplatte angeordnet sein, welche z.B. auf der Basisplatte 73 angebracht ist und somit von der Waage 71 bzw. der Fördereinheit 3 kraftentkoppelt ist. Schwingungen beim Transport des Leergutes können auf diese Art von der Steuerungsplatine 59-1 ferngehalten werden.

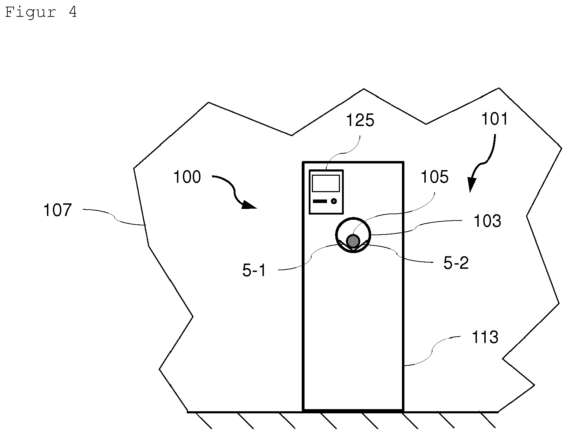

In der **Fig.3A** (seitliche, schematische Schnittansicht) und in der **Fig.4** (schematische Vorderansicht) ist ein Leergutrücknahmeautomat 100 mit der vorhergehend beschriebenen Eingabeeinheit 1 gemäß einer beispielhaften Ausführungsform in einem Betriebszustand dargestellt. In der Fig.3B (seitliche, schematische Schnittansicht) ist der Leergutrücknahmeautomat 100 der Fig.3A in einem Wartungs-/Reinigungszustand darstellt.

Der Leergutrücknahmeautomat 100 ist in einem Automatenraum 101 einer Leergutrücknahmestelle (z.B. einem Super- oder Getränkemarkt) aufgestellt, sodass Verbraucher an einer Vorderseite des Leergutrücknahmeautomaten 100 durch eine dort vorgesehene Eingabeöffnung 103 Leergut 105 in den Leergutrücknahmeautomaten 100 einführen und somit zurückgeben können. Gewöhnlich ist der Leergutrücknahmeautomat 100 so aufgestellt, dass zumindest dessen Rückseite räumlich vom Automatenraum 101 getrennt ist, z.B. durch eine Wand 107. An der Rückseite des Leergutrücknahmeautomaten 100 (d.h. hinter der Wand 107) wird die Handhabung des Leergutes 105 durchgeführt, sodass Lärm und Gerüche aufgrund der Leerguthandhabung vom Automatenraum 101 (weitestgehend) ferngehalten werden.

Der Leergutrücknahmeautomat 100 weist ein Gehäuse 111, eine das Gehäuse 111 an der Vorderseite davon verschließende Tür 113, die zuvor beschriebene Eingabeeinheit 1, einen Restflüssigkeit-Sammelbehälter 115 und ein Reinigungsgerät-Staufach 117 (welches optional auch weggelassen werden kann) auf. Die Tür 113 ist schwenkbar mit dem Gehäuse 111 verbunden, sodass in einem geschlossenen Zustand der Tür 113 (siehe Figuren 3A und 4) die darin vorgesehene Eingabeöffnung 103 zu den Förderbändern 5-1, 5-2 korrespondiert. Die Tür 113 weist weiter eine Leergut-Erfassungsvorrichtung 119 auf, welche in Form eines Kragens um die Eingabeöffnung 101 herum an der Innenseite der Tür 113 angeordnet ist, um den Typ des durch die Eingabeöffnung 103 in den Leergutrücknahmeautomaten 100 eingegebenen Leergutes 105 zu erfassen. Die Leergut-Erfassungsvorrichtung 119 ist derart ausgebildet, dass sie in einem Winkelbereich von 360° um die Eingabeöffnung 103 herum beim Eingeben von Leergut 105 durch die Eingabeöffnung 103 den Leerguttyp des eingegebenen Leergutes 105 erfasst, z.B. durch das Erfassen eines auf dem Leergut 105 angebrachten Barcodes (bspw. auch durch Kameras und/oder im Zusammenspiel mit der Waage 71). Eine solche Leergut-Erfassungsvorrichtung 119 ist bekannt und wird nicht weiter beschrieben. Weiter ist in einem vorderen Bereich im Leegutrücknahmeautomat 100 der Restflüssigkeit-Sammelbehälter 115 angeordnet. Über einen Zulauf 121 (z.B. eine Rampe), der im Leergutrücknahmeautomaten 100 unterhalb der Eingabeeinheit 1 angeordnet ist, empfängt der Restflüssigkeit-Sammelbehälter 115 die über die Rinne 17 abfließende Restflüssigkeit, sodass sie im Restflüssigkeit-Sammelbehälter 115 gesammelt wird. Zudem korrespondieren die Förderbänder 5-1, 5-2 zu einer Ausgabeöffnung 123, welche an der Rückseite des Leergutrücknahmeautomaten 100 vorgesehen ist und durch welche hindurch das Leergut 105 aus dem Leergutrücknahmeautomaten 100 ausgebbar ist. Zudem ist auf der Außenseite der Tür 113 eine Ein- und Ausgabevorrichtung 125 angeordnet, mittels welcher ein Nutzer mit dem Leergutrücknahmeautomaten 100 kommunizieren kann und welche einen Wertbon für das zurückgegebene Leergut 105 ausgeben kann.

Im geschlossenen Zustand der Tür 113, wie es in den Fig.3A und Fig.4 gezeigt ist, befindet sich der Leergutrücknahmeautomat 100 im Betriebszustand, sodass Leergut 105 eingegeben werden kann. Das durch die Eingabeöffnung 103 eingegebene Leergut 105 wird von der Leergut-Erfassungsvorrichtung 119 (z.B. auch von der Waage 71) erfasst und der Leerguttyp wird ermittelt. Anschließend wird das Leergut 105 von der Transporteinheit 3 durch die Ausgabeöffnung 123 aus dem Leergutrücknahmeautomaten 100 ausgegeben. Der Nutzer erhält nach dem Abschluss der Leergutrückgabe durch die Ein- und Ausgabevorrichtung 125 einen Wertbon im Gegenwert des zurückgegebenen Leergutes 105. Eine Steuerungsvorrichtung des Leergutrücknahmeautomaten 100, welche den Betrieb der Eingabeeinheit 1, der Leergut-Erfassungsvorrichtung 119, der Waage 71, der Ein- und Ausgabevorrichtung 125 und etc. steuert, sowie deren zugehörige Sensoren, ist im Leergutrücknahmeautomaten 100 vorgesehen, aber nicht weiter erläutert.

Im geöffneten Zustand der Tür 113, wie es in der Figur 3B gezeigt ist, befindet sich der Leergutrücknahmeautomat 100 im Wartungs-/Reinigungszustand. In diesem Zustand ist die Fördereinheit 3 zugänglich, d.h., die Fördereinheit 3 kann mittels der Führungsstruktur 9 nach vorne aus dem Leergutrücknahmeautomaten 100 herausgezogen werden und ist für Wartungs-/Reinigungstätigkeiten leicht zugänglich. Wie oben beschrieben können der erste und der zweite Förderband-Tragarm 7-1, 7-2 mittels der zugehörigen Schwenkkupplungsvorrichtungen 31-1, 31-2 und der zugehörigen Verschiebekupplungsvorrichtung 33-1, 33-2 von der Fördereinheit 3 gelöst werden, um z.B. separat gereinigt zu werden (in diesem Fall sind die Förderbänder 5-1, 5-2 frei bewegbar, d.h., jeder Abschnitt davon kann gereinigt werden). Die Fördereinheit 3, kann mittels im Reinigungsgerät-Staufach 117 aufbewahrten Reinigungsmitteln- und Geräten (z.B. Schmutzlösemittel, Bürsten, etc.) gereinigt werden, ebenso wie der Restflüssigkeit-Sammelbehälter 115. Nach dem Reinigen der Fördereinheit 3 (und z.B. des Restflüssigkeit-Sammelbehälters 115) kann die Fördereinheit 3 entlang der Transportrichtung T wieder in den Leergutrücknahmeautomaten 100 hinein eingefahren und verriegelt werden und kann die Tür 113 wieder geschlossen werden, sodass der Leergutrücknahmeautomat 100 wieder in den Betriebszustand versetzt wird.

## Patentansprüche

1. Eingabeeinheit (1) für einen Leergutrücknahmeautomaten (100), wobei die Eingabeeinheit (1) aufweist:
• eine Fördereinheit (3) mit mindestens einem Förderband (5-1, 5-2) zum Aufnehmen und Transportieren eines auf das mindestens eine Förderband (5-1, 5-2) gelegten Leergutes (105) entlang einer Transportrichtung,
• wobei das mindestens eine Förderband (5-1, 5-2) auf einem Förderband-Tragarm (7-1, 7-2) umläuft, welcher an einem Ende davon durch eine Verschiebekupplungsvorrichtung (33-1, 33-2) und eine Schwenkkupplungsvorrichtung (31-1, 31-2) lösbar mit der Fördereinheit (3) gekuppelt ist; und
eine Führungsstruktur (9; 63-1, 63-2) zum Tragen und Führen der Fördereinheit (3) entlang der Transportrichtung relativ zu einem Gehäuse (111) des Leergutrücknahmeautomaten (100).

2. Eingabeeinheit (1) gemäß Anspruch 1,
wobei die Fördereinheit (3) mehrere in einem Winkel zueinander angeordnete Förderbänder (5-1, 5-2) aufweist.

3. Eingabeeinheit (1) gemäß Anspruch 1 oder 2,
wobei die Führungsstruktur (9) mindestens eine Schiene (63-1, 63-2) aufweist, auf welcher die Fördereinheit (3) verschiebbar getragen und geführt wird.

4. Eingabeeinheit (1) gemäß Anspruch 3,
wobei die mindestens eine Schiene (63-1, 63-2) als Teleskopschiene ausgebildet ist.

5. Eingabeeinheit (1) gemäß einem der Ansprüche 1 bis 4, wobei die Fördereinheit (3) schubladenförmig ausgebildet ist.

6. Eingabeeinheit (1) gemäß einem der Ansprüche 1 bis 5, ferner aufweisend:
mindestens einen Antrieb zum Antreiben des mindestens einen Förderbands (5-1, 5-2).

7. Eingabeeinheit (1) gemäß Anspruch 6,
wobei der mindestens eine Antrieb einen Motor (51-1) aufweist.

8. Eingabeeinheit (1) gemäß einem der Ansprüche 1 bis 5, ferner aufweisend:
mehrere Antriebe zum Antreiben der mehreren Förderbänder (5-1, 5-2), wobei jeweils ein Antrieb zum Antreiben eines jeweils zugeordneten Förderbandes mit dem jeweiligen Förderband gekuppelt ist.

9. Eingabeeinheit (1) gemäß einem der Ansprüche 1 bis 8, wobei die Fördereinheit (3) lösbar mit der Führungsstruktur (9; 63-1, 63-2) gekuppelt ist.

10. Eingabeeinheit (1) gemäß einem der Ansprüche 1 bis 9, wobei die Fördereinheit (3) ferner aufweist:
• eine Trägerplatte; und
• eine oder mehrere auf der Trägerplatte montierte Steuerungsplatinen (59) mit mindestens einem Antriebs-Steuerungsschaltkreis.

11. Eingabeeinheit (1) gemäß einem der Ansprüche 1 bis 10, wobei die Fördereinheit (3) ferner aufweist:
• eine Waage (71) mit einer oder mehreren Wägezellen;
• wobei das mindestens eine Förderband (5-1, 5-2) auf der Waage (71) angeordnet ist.

12. Eingabeeinheit (1) gemäß Anspruch 11,
wobei die Fördereinheit (3) ferner aufweist:
• eine Trägerplatte; und
• eine oder mehrere auf der Trägerplatte montierte Steuerungsplatinen (59) mit mindestens einem Antriebs-Steuerungsschaltkreis;
wobei die Trägerplatte von der Waage (71) kraftentkoppelt ist.

13. Leergutrücknahmeautomat (100), aufweisend:
• ein Gehäuse (111),
• eine Tür (113) mit einer Öffnung (103) zum Durchführen eines Leergutes (105), welche schwenkbar am Gehäuse (111) befestigt ist,
• eine Eingabeeinheit (1) mit einer Fördereinheit (3) gemäß einem der Ansprüche 1 bis 12, wobei die Fördereinheit (3) in dem Gehäuse (111) derart relativ zu der Öffnung (103) angeordnet ist, dass ein durch die Öffnung (103) geführtes Leergut (105) auf das mindestens eine Förderband (5-1, 5-2) gelegt werden kann,
wobei in einem geschlossenen Zustand der Tür (113) der Zugriff auf die Führungsstruktur (9; 63-1, 63-2) verhindert ist.

14. Leergutrücknahmeautomat (100) gemäß Anspruch 13, wobei die Tür (113) in einem geöffneten Zustand einen Zugriff auf die Führungsstruktur (9; 63-1, 63-2) erlaubt und die Fördereinheit (3) entgegen der Transportrichtung (T) bewegt werden kann.

## Claims

1. Input unit (1) for a reverse vending machine (100), wherein the input unit (1) has:
• a conveying unit (3) with at least one conveying belt (5-1, 5-2) for receiving and transporting along a transporting direction an empty container (105) placed on the at least one conveying belt (5-1, 5-2),
• wherein the at least one conveying belt (5-1, 5-2) circulates on a conveying-belt carrying arm (7-1, 7-2) which, at one end thereof, is coupled to the conveying unit (3) in a releasable manner by a displacement-action coupling device (33-1, 33-2) and a pivoting-action coupling device (31-1, 31-2); and
a guide structure (9; 63-1, 63-2) for carrying and guiding the conveying unit (3) along the transporting direction relative to a housing (111) of the reverse vending machine (100).

2. Input unit (1) according to Claim 1,
wherein the conveying unit (3) has a plurality of conveying belts (5-1, 5-2) arranged at an angle in relation to one another.

3. Input unit (1) according to Claim 1 or 2,
wherein the guide structure (9) has at least one rail (63-1, 63-2), on which the conveying unit (3) is carried, and guided, in a displaceable manner.

4. Input unit (1) according to Claim 3,
wherein the at least one rail (63-1, 63-2) is designed in the form of a telescopic rail.

5. Input unit (1) according to one of Claims 1 to 4, wherein the conveying unit (3) is designed in the form of a drawer.

6. Input unit (1) according to one of Claims 1 to 5, further having:
at least one drive for driving the at least one conveying belt (5-1, 5-2).

7. Input unit (1) according to Claim 6,
wherein the at least one drive has a motor (51-1).

8. Input unit (1) according to one of Claims 1 to 5, further having:
a plurality of drives for driving the plurality of conveying belts (5-1, 5-2), wherein in each case one drive for driving a respectively associated conveying belt is coupled to the respective conveying belt.

9. Input unit (1) according to one of Claims 1 to 8, wherein the conveying unit (3) is coupled to the guide structure (9; 63-1, 63-2) in a releasable manner.

10. Input unit (1) according to one of Claims 1 to 9, wherein the conveying unit (3) further has:
• a carrier plate; and
• one or more printed circuit boards (59) which are mounted on the carrier plate and have at least one drive-control circuit.

11. Input unit (1) according to one of Claims 1 to 10, wherein the conveying unit (3) further has:
• a weighing machine (71) with one or more load cells;
• wherein the at least one conveying belt (5-1, 5-2) is arranged on the weighing machine (71).

12. Input unit (1) according to Claim 11,
wherein the conveying unit (3) further has:
• a carrier plate; and
• one or more printed circuit boards (59) which are mounted on the carrier plate and have at least one drive-control circuit;
wherein the carrier plate is uncoupled from the weighing machine (71) in respect of forces.

13. Reverse vending machine (100) having:
• a housing (111),
• a door (113) with an opening (103) through which to guide an empty container (105), the door being fastened on the housing (111) in a pivotable manner,
• an input unit (1) with a conveying unit (3) according to one of Claims 1 to 12, wherein the conveying unit (3) is arranged in the housing (111) relative to the opening (103) such that an empty container (105) guided through the opening (103) can be placed on the at least one conveying belt (5-1, 5-2),
wherein, in a closed state of the door (113), access to the guide structure (9; 63-1, 63-2) is prevented.

14. Reverse vending machine (100) according to Claim 13, wherein, in an open state, the door (113) allows access to the guide structure (9; 63-1, 63-2) and the conveying unit (3) can be moved counter to the transporting direction (T).

## Revendications

1. Unité d'entrée (1) destinée à un automate de récupération d'emballages vides (100), l'unité d'entrée (1) comportant :
• une unité de transport (3) munie d'au moins une bande transporteuse (5-1, 5-2) destinée à recevoir et transporter des emballages vides (105), placés sur l'au moins une bande transporteuse (5-1, 5-2), dans un sens de transport,
• l'au moins une bande transporteuse (5-1, 5-2) tournant sur un bras de support de bande transporteuse (7-1, 7-2) qui est accouplé de manière amovible à l'unité de transport (3) à une de ses extrémité par le biais d'un dispositif d'accouplement coulissant (33-1, 33-2) et d'un dispositif d'accouplement pivotant (31-1, 31-2) ; et
une structure de guidage (9 ; 63-1, 63-2) destinée à supporter et guider l'unité de transport (3) dans le sens de transport par rapport à un boîtier (111) de l'automate de récupération d'emballages vides (100).

2. Unité d'entrée (1) selon la revendication 1,
l'unité de transport (3) comportant une pluralité de bandes transporteuses (5-1, 5-2) disposées angulairement les unes par rapport aux autres.

3. Unité d'entrée (1) selon la revendication 1 ou 2,
la structure de guidage (9) comportant au moins un rail (63-1, 63-2) sur lequel l'unité de transport (3) est supportée et guidée de manière coulissante.

4. Unité d'entrée (1) selon la revendication 3,
l'au moins un rail (63-1, 63-2) étant conçu comme un rail télescopique.

5. Unité d'entrée (1) selon l'une des revendications 1 à 4,
l'unité de transport (3) étant conçue sous la forme d'un tiroir.

6. Unité d'entrée (1) selon l'une des revendications 1 à 5, ladite unité d'entrée comportant en outre :
au moins un entraînement destiné à entraîner l'au moins une bande transporteuse (5-1, 5-2).

7. Unité d'entrée (1) selon la revendication 6,
l'au moins un entraînement comportant un moteur (51-1) .

8. Unité d'entrée (1) selon l'une des revendications 1 à 5, ladite unité d'entrée comportant en outre :
une pluralité d'entraînements destinés à entraîner la pluralité de bandes transporteuses (5-1, 5-2), un entraînement destiné à entraîner une bande transporteuse respectivement associée étant accouplé à la bande transporteuse respective.

9. Unité d'entrée (1) selon l'une des revendications 1 à 8, l'unité de transport (3) étant accouplée de manière amovible à la structure de guidage (9 ; 63-1, 63-2).

10. Unité d'entrée (1) selon l'une des revendications 1 à 9, l'unité de transport (3) comportant en outre :
• une plaque de support ; et
• une ou plusieurs cartes de commande (59) montées sur la plaque de support et munies d'au moins un circuit de commande d'entraînement.

11. Unité d'entrée (1) selon l'une des revendications 1 à 10, l'unité de transport (3) comportant en outre :
• une balance (71) munie d'une ou plusieurs cellules de pesée ;
• l'au moins une bande transporteuse (5-1, 5-2) étant disposée sur la balance (71).

12. Unité d'entrée (1) selon la revendication 11, l'unité de transport (3) comportant en outre :
• une plaque de support ; et
• une ou plusieurs cartes de commande (59) montées sur la plaque de support et pourvues d'au moins un circuit de commande d'entraînement ;
la plaque de support étant découplée dynamiquement de la balance (71).

13. Automate de récupération d'emballages vides (100), ledit automate comportant :
• un boîtier (111),
• une porte (113) qui est pourvue d'une ouverture (103) destinée au passage d'un emballage vide (105) et qui est fixée de manière pivotante au boîtier (111),
• une unité d'entrée (1) munie d'une unité de transport (3) selon l'une des revendications 1 à 12, l'unité de transport (3) étant disposée dans le boîtier (111) par rapport à l'ouverture (103) de telle sorte qu'un emballage vide (105) passé à travers l'ouverture (103) peut être placé sur l'au moins une bande transporteuse (5-1, 5-2),
l'accès à la structure de guidage (9 ; 63-1, 63-2) étant empêché lorsque la porte (113) est fermée.

14. Automate de récupération d'emballages vides (100) selon la revendication 13, la porte (113) permettant, lorsqu'elle est ouverte, d'accéder à la structure de guidage (9 ; 63-1, 63-2) et l'unité de transport (3) pouvant être déplacée dans le sens inverse au sens de transport (T).
